# EUROPÄISCHE PATENTSCHRIFT

(11) **EP 3 327 267 B1**
(45) Veröffentlichungstag und Bekanntmachung des Hinweises auf die Patenterteilung: **10.07.2019**
(21) Anmeldenummer: 17202109.9
(22) Anmeldetag: 16.11.2017
(51) Int. Cl.: F02B 33/06, F02B 41/06, F02B 29/04, F02B 33/20, F02B 33/22, F02B 41/10

(54) **OTTOMOTOR MIT FOLGEZYLINDERN**
OTTO ENGINE WITH SEQUENCE CYLINDERS
MOTEUR À ALLUMAGE COMMANDÉ DOTÉ DE CYLINDRES RÉCEPTEURS

(30) Priorität: 28.11.2016 DE 102016122855
(43) Veröffentlichungstag der Anmeldung: 30.05.2018
(73) Patentinhaber: Bauer, Gerd, Chappaqua, NY 10514 (US)
(72) Erfinder: Bauer, Gerd, Chappaqua, NY 10514 (US)
(74) Vertreter: WSL Patentanwälte Partnerschaft mbB

(56) Entgegenhaltungen:
- EP-A1- 0 126 463
- EP-A1- 0 126 468
- WO-A2-99/06682
- US-A- 4 783 966
- US-A1- 2011 226 224

## Beschreibung

Die vorliegende Erfindung betrifft eine Verbrennungskraftmaschine in Form eines Motors mit einer Anzahl von Arbeitszylindern, welche Ventile und/oder Düsen für die Zufuhr beziehungsweise Einspritzung von Brennstoff und Luft sowie für den Auslass von Abgas aufweisen. Ein solcher Motor ist vor allem in Form des herkömmlichen Ottomotors und insbesondere als Automotor bekannt.

Die Erfindung betrifft auch ein Verfahren zum Betrieb eines erfindungsgemäßen Motors.

Ein Nachteil nahezu sämtlicher Verbrennungskraftmaschinen und insbesondere des Ottomotors liegt in der nur sehr mäßigen Umsetzung der eingesetzten Energie in Bewegungsenergie. Typischerweise wandelt ein Ottomotor etwa 10 bis 20 Prozent der eingesetzten chemischen Energie in mechanische Fortbewegungsenergie um. Der größte Teil der eingesetzten Energie geht verloren in Form von Abwärme und durch ungenutztes Abblasen des Restdruckes des aus dem Motorzylinder ausgestoßenen Abgases.

Der geringe Wirkungsgrad von Ottomotoren hängt unter anderem zusammen mit einem relativ geringen Verdichtungsverhältnis des Luft-Brennstoffgemischs und den maximal tolerierbaren Temperaturen sowie einer unvollständigen Verbrennung des Kraftstoffes im Arbeitstakt.

Es ist jedoch nicht ohne weiteres möglich, das Verdichtungsverhältnis zu erhöhen, weil dann auch die Temperaturen im Zylinder entsprechend ansteigen und die Gefahr unkontrollierter Fehlzündungen besteht, die innerhalb von kurzer Zeit zu einer Zerstörung eines Motors führen können.

Der vorliegenden Erfindung liegt daher die Aufgabe zugrunde, einen Motor und ein Verfahren zu dessen Betrieb zu schaffen, beziehungsweise in der Weise umzugestalten, dass der Brennstoff erheblich effizienter genutzt ohne dass übermäßig hohe Temperaturen entstehen, die die Gefahr von Fehlzündungen mit sich bringen.

Diese Aufgabe wird hinsichtlich des Motors dadurch gelöst, dass jeder Arbeitszylinder des Motors mit einem Folgezylinder gekoppelt ist, welcher durch eine Teilverbrennung und den Restdruck nicht vollständig verbrannter heißer Abgase des Arbeitszylinders angetrieben wird und welcher dem Arbeitszylinder andererseits vorverdichtete Verbrennungsluft zuführt, mit einer Kühleinrichtung, welche das vorverdichtete Gas kühlt, einer Einrichtung zum Überführen des vorverdichteten, gekühlten Gases in den Arbeitszylinder und einem Transferventil, welches für einen weiteren Takt des Folgezylinders unter Druck stehendes Abgas in den Folgezylinder überführt.

Erfindungsgemäß weist der Motor also mindestens zwei Zylinder auf, nämlich einen Arbeitszylinder, der im Wesentlichen einem herkömmlichen Zylinder entspricht, und einen Folgezylinder, der effektiv eine Erweiterung des Arbeitszylinders darstellt, da er einerseits bereits eine Vorverdichtung der Verbrennungsluft vornimmt und andererseits auch als Expansionsraum für nicht vollständig verbranntes Arbeitsgas (Mischung aus Abgas und nicht vollständig verbranntem Verbrennungsgas) aus dem Arbeitszylinder dient, sodass sich aufgrund der vergrößerten Expansion das Arbeitsgas wesentlich besser abkühlen und entspannen kann, wobei der Druck des Abgases aus dem Arbeitszylinder bis zum Ausgang des Folgezylinders im Vergleich zur dem Restdruck im Zylinder herkömmlicher Motoren drastisch abgesenkt werden kann. Das Abgas hat also einen geringeren Restdruck und auch eine geringere Temperatur, was notwendigerweise mit einer effektiveren Nutzung des Brennstoffs einhergeht.

Schon das effektive Verdichtungsverhältnis ist wesentlich höher als bei einem herkömmlichen Motor, da die dem Arbeitszylinder zugeführte Verbrennungsluft, gegebenenfalls auch ein Gemisch aus Verbrennungsluft und Brennstoff, bereits durch den Folgezylinder vorverdichtet ist, jedoch vor der Überführung in den Arbeitszylinder gekühlt wird, sodass auch bei mäßiger weiterer Verdichtung eine kritische Temperaturgrenze nicht überschritten wird. Das effektive Verdichtungsverhältnis wird gleichzeitig jedoch gesteigert, da es sich als Produkt der Verdichtungsverhältnisse von Folgezylinder und Arbeitszylinder ergibt. Bei einem Verdichtungsverhältnis des Folgezylinders von 3 und einem Verdichtungsverhältnis des Arbeitszylinders von 8 ergibt sich als effektives Verdichtungsverhältnis ein Wert von 24, welcher mit herkömmlichen Motoren nicht zu erreichen ist, im Falle des erfindungsgemäßen Motors jedoch durch die Vorverdichtung im Folgezylinder und anschließende Kühlung vor der Überführung in den Arbeitszylinder ermöglicht wird.

Das erfindungsgemäße Verfahren ist dementsprechend durch die Verwendung eines Motors der vorstehend beschriebenen Art gekennzeichnet, bei welchem in einem ersten Takt eines Folgezylinders Umgebungsluft angesaugt wird, diese Luft in einem zweiten Takt des Folgezylinders verdichtet und nach Zwischenkühlung an den Arbeitszylinder überführt wird, wobei nach den entsprechenden Verdichtungs- und Arbeitstakten des Arbeitszylinders das unter Restdruck stehende und nicht vollständig verbrannte Arbeitsgas des Arbeitszylinders an den Folgezylinder überführt wird, wobei der Folgezylinder wiederum in einem dritten Takt das heiße Abgas aufnimmt, entspannt und der Folgezylinder in einem vierten Takt das Abgas mit einem reduzierten Restdruck ausstößt. Entsprechende Motoren sind aus WO 99/06682 A2 und EP 0 126 463 A1 bekannt.

Im Gegensatz zum bekannten Stand der Technik ist dem Folgezylinder Erfindungsgemäß noch eine inverse Turbine nachgeschaltet, und zwar mit einer Eingangsstufe für eine Expansion unterhalb des Umgebungsdrucks, einem der Eingangsstufe nachgeschalteten Zwischenkühler (der zum Erreichen des niedrigeren Drucks am Ende der Eingangsstufe erforderlich ist) mit einer anschließenden Verdichtungsstufe für die abschließende Verdichtung auf Umgebungsdruck. Der Folgezylinder ist demnach in einem Takt zur Vorverdichtung von Verbrennungsluft dem Arbeitszylinder vorgeschaltet und für einen Arbeitstakt dem Arbeitszylinder nachgeschaltet, so dass das vollständig verbrannte Abgas danach aus dem Folgezylinder ausgestoßen wird und von dort in eine inverse Turbine überführt wird.

Zur weiteren Steigerung der Effizienz des Motors sind verschiedene Maßnahmen denkbar. Zum einen ist es sinnvoll, wenn der Folgezylinder ein größeres Volumen aufweist als der Arbeitszylinder, wobei das Volumen des Folgezylinders vorzugsweise das 1,2- bis 4-fache des Volumens des Arbeitszylinders beträgt. Dies ermöglicht eine Entspannung des Arbeitsgases auf einen Restdruck im Bereich des Umgebungsdruckes, insbesondere wenn das Volumen der vom Folgezylinder angesaugten Frischluft begrenzt wird und kleiner ist als das Volumen des Folgezylinders im unteren Totpunkt.

Weiterhin liegt das Verdichtungsverhältnis des Folgezylinders in bevorzugten Ausführungsformen zwischen 2 und 5.

Wie bereits erwähnt, ist außerdem eine Kühleinrichtung für vorverdichtetes Gas zweckmäßigerweise zwischen dem Ausgang des Folgezylinders und dem entsprechenden Eingang des Arbeitszylinders vorgesehen.

In einer weiteren Ausführungsform weist der Motor zusätzlich eine Abgasrückführung auf.

Der Motor kann insbesondere als Vierzylindermotor ausgestattet sein mit je vier Arbeitszylindern und vier Folgezylindern und mit zwei Kurbelwellen, von denen eine den Arbeitszylindern
und die andere den Folgezylindern zugeordnet ist, wobei zweckmäßigerweise die Kurbelwellen miteinander gekoppelt sind und vorzugsweise einstellbar miteinander gekoppelt sind, sodass sich der relative Winkel zwischen den oberen Totpunkten der Arbeitszylinder und der Folgezylinder ändern lässt. Denkbar wäre auch die Verbindung aller Zylinder mit einer gemeinsamen Kurbelwelle, was allerdings den Winkelversatz zwischen Arbeitszylinder und Folgezylinder festlegen würde, der bei Verwendung zweier getrennter und verstellbar gekoppelter Kurbelwellen variabel und unter Umständen auch dynamisch variabel einstellbar sein könnte.

Das Verdichtungsverhältnis des Arbeitszylinders sollte zweckmäßigerweise zwischen 5 und 10 liegen, woraus sich das oben beschriebene erhöhte effektive Verdichtungsverhältnis ergibt, da bereits die dem Arbeitszylinder zugeführte Verbrennungsluft um einen Faktor zwischen 2 und 5 vorverdichtet ist.

In einer Ausführungsform sind die Zylinder in V-Form angeordnet, wobei ein Schenkel der V-Form durch die Arbeitszylinder und der andere Schenkel der V-Form durch die Folgezylinder gebildet wird. Diese Variante ist insbesondere im Falle einer höheren Vorverdichtung vorteilhaft, weil bei höherer Vorverdichtung der Folgezylinder mit dem Arbeitszylinder vergleichbar groß ausgestaltet werden kann.

In einer Ausführungsform sind der oder die Folgezylinder als 4-Taktzylinder ausgebildet. Je einem Arbeitszylinder ist dann ein Folgezylinder zugeordnet, der gegenüber dem Arbeitszylinder versetzte Arbeitstakte hat und sowohl die Vorverdichtung für die dem Arbeitszylinder zugeführte Verbrennungsluft übernimmt als auch das noch nicht vollständig verbrannte Abgas als sein Arbeitsgas aus dem Arbeitszylinder aufnimmt.

In einer anderen Variante kann der oder können die Folgezylinder als 2-Taktzylinder ausgebildet sein, wobei die Zahl der Folgezylinder die Hälfte der Zahl der Arbeitszylinder beträgt und jeder Folgezylinder zwei verschiedenen Arbeitszylindern zugeordnet ist, deren Arbeitstakte im Wesentlichen um 180° zueinander versetzt sind. Der Folgezylinder arbeitet dabei ebenso synchron zu den Arbeitszylindern wie im Falle von 4-Taktern, benötigt aber nur halb so viele (nämlich 2) Takte für einen Zyklus der Vorverdichtung und (Rest-)Verbrennung und kann so in 4 (2 x2) Takten nacheinander für zwei Arbeitszylinder als Folgezylinder fungieren.

Bei allen Varianten ist es bevorzugt, die Parameter so zu wählen, dass das Expansionsvolumen insgesamt größer ist als das Volumen der angesaugten Frischluft. Dies kann man beispielsweise durch vorzeitiges Schließen eines Einlassventils für den Folgezylinder erreichen.

Hinsichtlich des erfindungsgemäßen Verfahrens werden die Parameter des Motors zweckmäßigerweise so eingestellt, dass der reduzierte Restdruck am Ausgang des Folgezylinders in etwa dem Umgebungsdruck entspricht. Der Restdruck am Ausgang des Folgezylinders hängt vor allem ab von dem zur Verfügung stehenden Volumen, dem Verdichtungsverhältnis, der Abgastemperatur und dem Grad der Verbrennung der Gase beim Übergang zu dem Folgezylinder.

Der Arbeitszylinder arbeitet weitgehend so wie der Zylinder eines herkömmlichen Ottomotors, jedoch mit der Modifikation, dass die in den Zylinder eintretende Verbrennungsluft oder gegebenenfalls auch bereits mit Brennstoff vermischte Verbrennungsluft vorverdichtet und nach oder bei der Vorverdichtung gekühlt in den Arbeitszylinder eintritt und in diesem in einem ersten Takt des Arbeitszylinders zusätzlich verdichtet wird. Daraufhin wird im nächsten Arbeitstakt das Brenngasgemisch gezündet, was den Kolben des Arbeitszylinders antreibt, wobei, ebenfalls im Unterschied zu einem herkömmlichen Ottomotor, das Ausgangsventil des Arbeitszylinders schon zu einem relativ frühen Zeitpunkt, zum Beispiel 30° bis 60° nach Erreichen des oberen Totpunkts des Arbeitszylinders, geöffnet werden kann. Demnach können die Abgase beziehungsweise die noch verbrennenden Gase dann bereits in den Folgezylinder übertreten, um dort weitere Arbeit zu leisten und den Kolben des Folgezylinders anzutreiben, wobei das größere Volumen des Folgezylinders zu einer entsprechend starken Expansion und Abkühlung und einer entsprechend vollständigeren Verbrennung führt. Die vorstehenden Angaben in Grad "°" beziehen sich auf den Hubzyklus eines Kolbens und damit auch auf die Winkelposition bei der Drehung der Kurbelwelle(n).

Während nämlich die Verbrennung von üblichem Benzin mit Luft zunächst bei sehr hohen Temperaturen nur bis hin zu CO und H₂O erfolgt, erfolgt die vollständige Verbrennung zu CO₂ nur verzögert und erst bei tieferer Temperatur unterhalb von 2000 °C, o dass in einem herkömmlichen Motor im Arbeitszylinder die vollständige Verbrennung zu CO₂ vor dem Ausstoß der Abgase nicht erreicht wird. Bei dem erfindungsgemäßen Motor findet jedoch aufgrund der stärkeren Entspannung und Abkühlung die Verbrennung bis hin zu CO₂ nahezu vollständig und jedenfalls weitgehender als herkömmlich statt, und das Arbeitsgas leistet bis dahin Arbeit nicht nur im Arbeitszylinder sondern auch im Folgezylinder.

Erfindungsgemäß wird die dann immer noch vorhandene Abwärme des aus dem Folgezylinder ausgestoßenen Abgases durch eine inverse Turbine in mechanische Arbeit umgewandelt. Unter einer inversen Turbine wird dabei eine Turbine verstanden, deren Eingangsstufe kein Verdichter, sondern eine Expansionsstufe ist. Dies ist möglich durch Abkühlen des Abgases in einem Zwischenkühler, der zwischen der Eingangsstufe und der Ausgangsstufe der inversen Turbine liegt. Aufgrund der Kühlung kann das in die Eingangsstufe der inversen Turbine eintretende, noch heiße Abgas abgekühlt und auf einen Druck unterhalb des Umgebungsdrucks expandiert werden, sodass die nachfolgende Ausgangsstufe der inversen Turbine als Verdichter ausgeführt ist und das abgekühlte Abgas auf Umgebungsdruck verdichtet und dann ausstößt.

Weiterhin ist bei dem erfindungsgemäßen Verfahren eine verzögerte Zündung beziehungsweise Spätzündung vorgesehen, das heißt die Zündung des Brennstoff-Luft-Gemischs erfolgt erst in einem Bereich bis zu 10 Grad, insbesondere zwischen 20° und 10° vor Erreichen des oberen Totpunkts des Arbeitszylinders. Dies führt wegen der damit verbundenen verzögerten Aufheizung im Bereich nach dem oberen Totpunkt zu einer niedrigeren Flammtemperatur und zu einer gleichmäßigeren Temperaturverteilung über den Arbeitstakt hinweg, sodass die Expansion im Arbeitszylinder eine im Wesentlichen isotherme Expansion ist. Dies ist gleichzeitig verbunden mit einer effizienteren und über den Arbeitstakt hinweg besser verteilten Verbrennung, von der ein Teil auch im Folgezylinder erfolgt. Bei sehr hohen Temperaturen verbrennt der Kraftstoff (Benzin) zu CO und Wasserstoffgas. Die weitere Verbrennungsstufe ist die Verbrennung zu Kohlenmonoxid und Wasser und erst in der letzten Stufe, die nur bei niedrigeren Temperaturen um die 1000 Grad und darunter stattfinden kann, erfolgt die vollständige Verbrennung zu CO2 und Wasser. Die letzte Verbrennungsstufe, deren Nutzung eine höhere Energieausbeute beinhaltet, kann also erst bei entsprechend niedrigeren Temperaturen stattfinden und das Brenngas muss auch dann noch effektiv entsprechende Arbeit verrichten können, das heißt es muss sich noch im Arbeitszylinder oder im Folgezylinder befinden. Ein Winkelversatz von 30° bis 60° zwischen Arbeitszylinder und Folgezylinder dehnt die Expansion in den Folgezylinder auch zeitlich aus und ergibt die erwähnte vollständigere Energieausnutzung des Brennstoffs.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine schematische Draufsicht auf einen Zylinderblock mit je einer Reihe von 4 angedeuteten Arbeitszylindern und 4 je einem Arbeitszylinder zugeordneten Folgezylindern,
- Figur 2: eine schematische, vertikale Schnittansicht durch einen Arbeitszylinder und einen zugeordneten Folgezylinder,
- Figur 3: ein Fließschema, welches den Weg der Verbrennungsluft durch Folgezylinder bis hin zum Ausgang einer inversen Turbine zeigt,
- Figur 4: die Momentaufnahme zu Beginn des Arbeitstakts des Arbeitszylinders mit einem nacheilenden Folgezylinder der vorverdichtete Luft an einen Zwischenkühler 17 ausstößt und
- Figur 5: ein alternatives Fließschema mit als Zweitakter ausgebildeten Folgezylindern

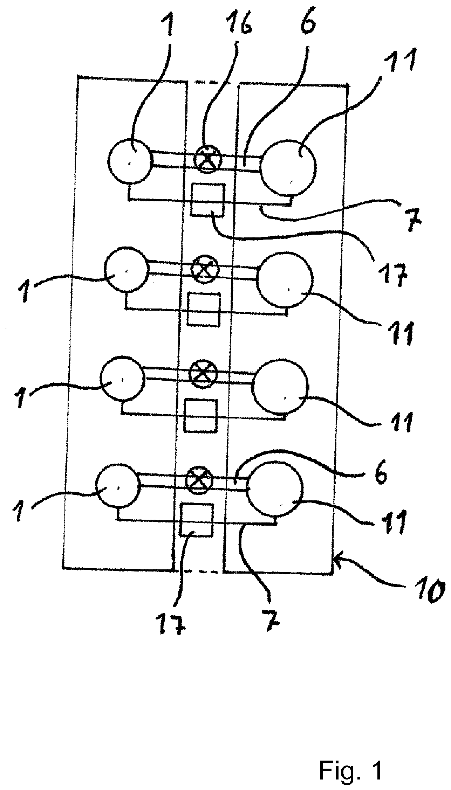

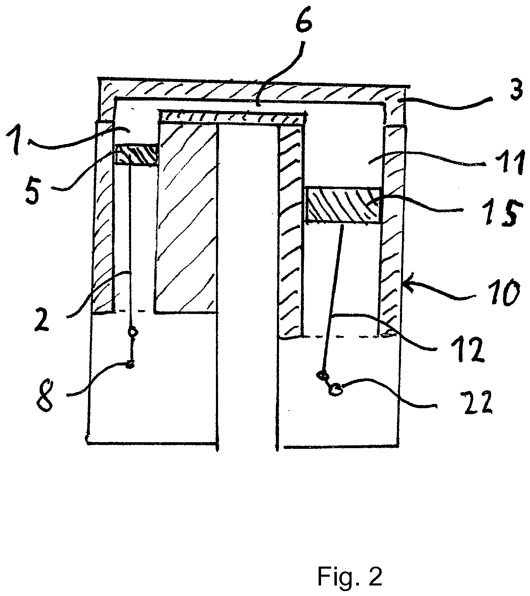

Man erkennt in der schematischen Draufsicht in Figur 1 einen Motorblock 10 mit einer Reihe von jeweils vier Arbeitszylindern 1 und vier Folgezylindern 11, wobei jeweils ein Arbeitszylinder 1 mit einem Folgezylinder 11 gekoppelt ist, konkret also über Ventile 16, 9 und entsprechende Überführungskanäle 6, 7 miteinander verbunden ist. In einem Verdichtungstakt ist der Folgezylinder über die Verbindung 7 mit einem Zwischenkühler 17 verbunden, von wo vorverdichtete Verbrennungsluft an den zugehörigen Arbeitszylinder 1 weitergeleitet wird. Im Verlaufe eines Arbeitstaktes des Zylinders 1 wird über das Ventil 16 die Verbindung zu dem Folgezylinder 11 hergestellt, der in einem Arbeitstakt entsprechende Leistung über das Pleuel 12 an eine zweite Kurbelwelle 22 abgibt, während der Arbeitszylinder 1 über das Pleuel 2 eine Kurbelwelle 8 antreibt. Die Kurbelwellen 8, 22 sind vorzugsweise einstellbar über ein nicht dargestelltes Getriebe miteinander gekoppelt, so dass die Hubbewegungen von Arbeitszylinder(n)1 und Folgezylinder(n) 11 jeweils in fester aber gegebenenfalls einstellbarer Beziehung stehen. Nach dem Abgas-Ausstoßtakt des Folgezylinders 11 kann dieser wieder Luft ansaugen und anschließend verdichten. (Siehe auch Figur 2).

Die Folgezylinder 11 haben dabei einen größeren Durchmesser und ein größeres Volumen als die Arbeitszylinder 1. Figur 2 zeigt im Wesentlichen einen Längsschnitt durch einen Arbeitszylinder 1 und einen zugehörigen Folgezylinder 11, wobei aber nicht alle Ventile und Kanäle dargestellt sind.

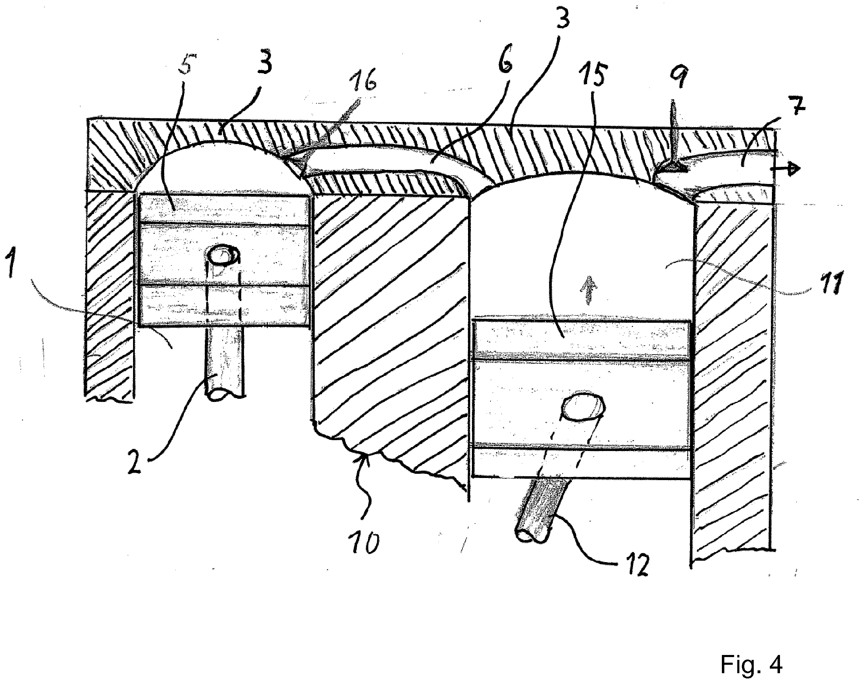

Figur 4 ist nochmals eine vergrößerte Schnittansicht eines Ausschnittes aus einem Motorblock 10 mit einem Zylinderkopf 3. Dieser Ausschnitt umfasst einen Arbeitszylinder 1 und einen benachbarten Folgezylinder 11, wobei die Arbeitsweise von Arbeitszylinder 1 und Folgezylinder 11 nachstehend noch genauer beschrieben wird. Figur 4 gibt einen Moment im zweiten Arbeitstakt des Folgezylinders wieder, das heißt den Takt, in welchem der Folgezylinder vorverdichtete Verbrennungsluft durch ein Ventil 9 (siehe Fig. 4) in einen Zwischenkühler ausschiebt. In dieser Darstellung befindet sich der Kolben 5 des Arbeitszylinders 1 im Bereich seines oberen Totpunkts mit maximaler Verdichtung des in ihm enthaltenen Gases und beginnt (gegebenenfalls nach Einspritzung vor Brennstoff) anschließend einen Arbeitstakt mit Expansion des verbrennenden Brennstoff-Luft-Gemischs.

Nach der Zündung eines Brennstoff-Luft-Gemischs in dem Arbeitszylinder 1 bewegt sich der Kolben des Arbeitszylinders abwärts, während das Brennstoff-Luft-Gemisch verbrennt und einen entsprechenden Druck erzeugt. Sobald sich der Kolben des Arbeitszylinders 1 um 30 bis 60° vom oberen Totpunkt aus gesehen wegbewegt hat, wird das Ventil 16 zum Folgezylinder geöffnet, dessen Ausgangsventil 9 dann geschlossen ist, sodass die heißen Verbrennungsgase im Arbeitszylinder auch in den Folgezylinder 11 übertreten und den Kolben 15 des Folgezylinders antreiben, das heißt in Figur 2 und 4 abwärts bewegen.

Wenn der Folgezylinder seinen unteren Totpunkt erreicht hat, wird das Ventil 16 geschlossen und ein weiteres, nicht dargestelltes Abgasventil des Folgezylinder geöffnet, sodass bei der erneuten Aufwärtsbewegung des Kolbens 15 des Folgezylinders 11 das Abgas ausgestoßen wird. Der gegenüber dem Kolben 15 voreilende Kolben 5 des Arbeitszylinders 1 bewegt sich dann im dritten Takt wieder abwärts und nimmt dabei aus dem Zwischenkühler 17 vorverdichtete Verbrennungsluft auf. Der mit einer gewissen Verzögerung folgende Kolben 15 des Folgezylinders 11 saugt in seinem nächsten Takt nach Schließen und Öffnen entsprechender Ventile Verbrennungsluft beziehungsweise Frischluft an.

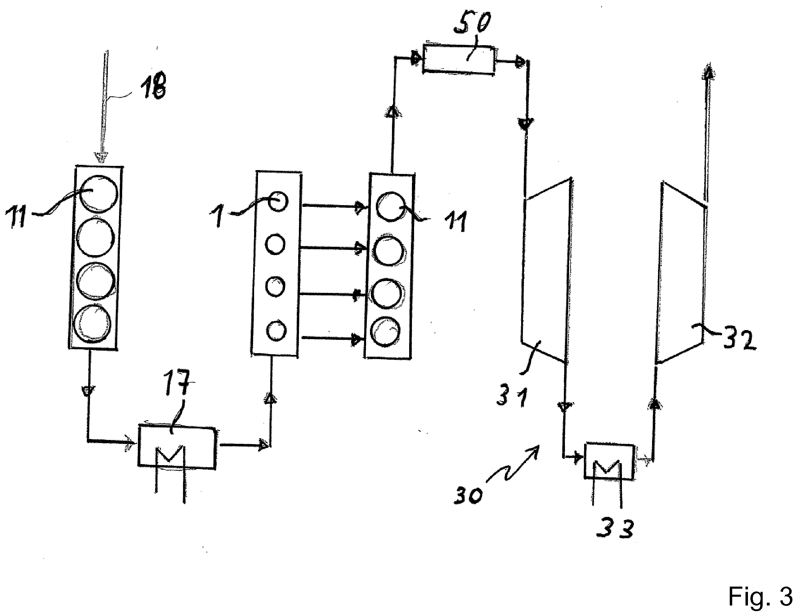

Nachdem der Kolben 5 des Arbeitszylinders 1 den unteren Totpunkt überschritten hat, verdichtet er die angesaugte (vorverdichtete) Luft oder eine entsprechendes Brennstoff-Luft-Gemisch, wobei Brennstoff gegebenenfalls auch erst bei oder kurz vor Erreichen des Oberen Totpunktes im Bereich des Zylinderkopfes 3 eingespritzt wird. Der Kolben15 des Folgezylinders 11 verdichtet dann bei geschlossenem Ventil 9 die zuvor angesaugte Verbrennungsluft und schiebt sie dann in einen Zwischenkühler 17 (siehe Figuren 1 und 3) und danach kann sich mit der Abwärtsbewegung des Kolbens 5 im Arbeitszylinder 1 nach Überschreiten des Totpunkts und Zündung der selbe Vorgang wiederholen.

Figur 3 zeigt ein Fließschema für den erfindungsgemäßen Motor wobei die Reihe aus Folgezylindern 11 hier nur zur Veranschaulichung der Reihenfolge des Fließschemas und der einzelnen Takte einmal vor und einmal hinter der Reihe aus Arbeitszylindern 1 dargestellt ist. Es versteht sich weiterhin, dass aus Gründen der vereinfachten Darstellung hier nur Weg über den Kühler 17 dargestellt ist, während tatsächlich vorverdichtete Luft aus jedem der Folgezylinder 11 über eine Kühler 17 und vor dort in einen zugeordneten Arbeitszylinder überführt wird. Der Zwischenkühler 17 kann aber ein von allen Folgezylindern 11 auf dem Überführungsweg von Folgezylinder zu Arbeitszylinder gemeinsam genutzter Kühler sein.

Die Frischluftzufuhr 18 erfolgt in einen Folgezylinder 11, wo die Frischluft vorverdichtet und in einem Kühler 17 gekühlt wird. Die vorverdichtete, gekühlte Frischluft wird einem Arbeitszylinder 1 zugeführt, wo anschließend der beschriebene Arbeitstakt ausgeführt wird, an welchem auch der Folgezylinder 11 erneut beteiligt ist, welcher der selbe Folgezylinder 11 ist, welcher zuvor in einem anderen Takt die Frischluft angesaugt und verdichtet hat.

Nachdem der Folgezylinder den entsprechenden Arbeitstakt vollführt hat, wird das nahezu auf den Umgebungsdruck im Folgezylinder 11 expandierte Abgas über einen Katalysator 50 zu einer inversen Turbine 30 geführt, deren Eingangsstufe 31 eine Expansionsstufe ist, welcher ein Zwischenkühler 33 nachgeschaltet ist. Dies bewirkt, dass die Expansion auf ein Niveau unterhalb des Umgebungsdrucks stattfindet, sodass anschließend wieder eine Verdichtung auf Umgebungsdruck in der Verdichterstufe 32 erfolgt. Durch die Expansion und Zwischenkühlung kann aus der im Abgas enthaltenen Wärmeenergie durch die Turbine 30 zusätzlich Bewegungsenergie gewonnen werden. Aufgrund der Zwischenkühlung ist die Verdichtungsarbeit in der Verdichterstufe 32 geringer als die durch Expansion und Abkühlung in der Expansionsstufe 31 gewonnene Energie.

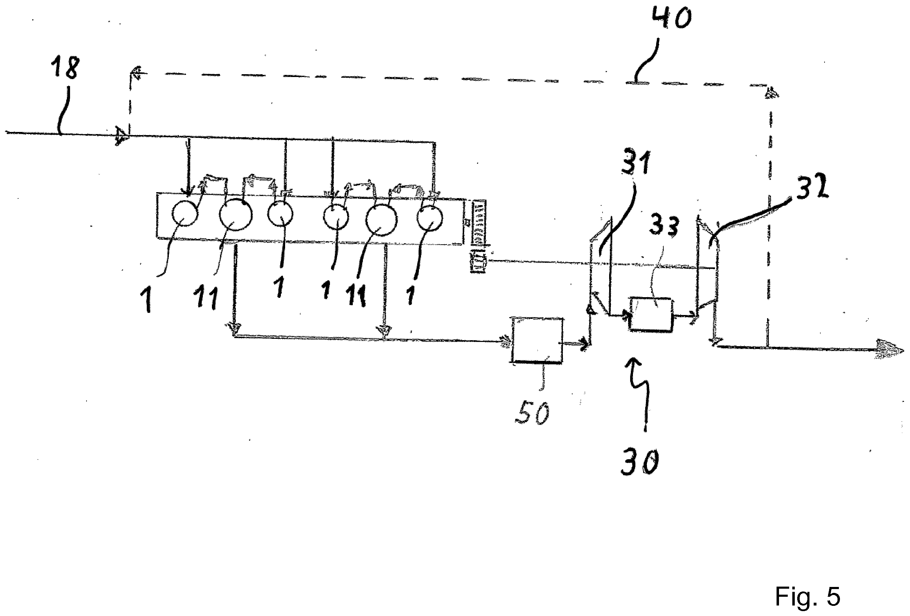

Figur 5 zeigt ein ähnliches Fließschema einer einfachen Variante, wobei die Folgezylinder hier als Zweitakter ausgeführt sind, so dass jeder Folgezylinder jeweils zwei Arbeitszylinder eines Viertaktmotors im Wechsel mit vorverdichteter Luft versorgen und durch den Abgasdruck der Arbeitszylinder angetrieben werden kann. Der Strom der Arbeits- und Abgase ist durch entsprechende Pfeile angedeutet. Eine echte Zwischenkühlung ist hier nicht vorgesehen, erfolgt aber zumindest teilweise auch schon durch Wärmeabfuhr im Folgezylinder und während der Überführung der vorverdichteten Verbrennungsluft zum Arbeitszylinder. Zusätzlich zu dem Fließschema analog zu Figur 3 zeigt aber Figur 5 auch noch eine Abgasrückführung 40, die am Ausgang des Verdichters 32 zu der Frischluftzufuhr 18 hin erfolgt.

Die Abgasrückrührung kann selbstverständlich auch bei anderen Motorvarianten gemäß der Erfindung realisiert werden und sorgt generell für eine verbesserte stöchiometrische Verbrennung zur Verminderung des Schadstoffausstoßes bei geringerem Energieeinsatz.

Aufgrund der besseren Energieausnutzung in allen Varianten können die Arbeitszylinder 1 vergleichsweise klein ausgeführt werden, sodass die Summe der Volumina von Arbeitszylinder 1 und Folgezylinder 11 zumindest annähernd dasselbe Volumen in Anspruch nimmt, wie ein herkömmlicher Arbeitszylinder (bei gleicher Gesamtleistung).

Das größere Verdichtungsverhältnis und die verlängerte Expansion unter annähernd isothermen Bedingungen und die Expansion bis auf den Umgebungsdruck verbessert die Energieausbeute, die durch eine inverse Turbine, welche die Restwärme des Abgases nutzt, noch weiter gesteigert wird.

## Patentansprüche

1. Motor mit mindestens einem Arbeitszylinder (1), welcher Ventile (16) und/oder Düsen für die Zufuhr bzw. Einspritzung von Brennstoff und Luft sowie für den Auslass von Abgas aufweist, wobei jeder Arbeitszylinder (1) mit einem Folgezylinder (11) gekoppelt ist, welcher durch den Druck heißer Abgase des Arbeitszylinders (1) angetrieben wird und welcher so ausgelegt und angeordnet ist, dass er dem Arbeitszylinder (1) andererseits vorverdichtete Verbrennungsluft zuführt, mit einer Kühleinrichtung (17), welche das vorverdichtete Gas kühlt, einer Einrichtung (9, 7) zum Überführen des gekühlten vorverdichten Gases in den Arbeitszylinder (1) und einem Transferventil (16), welches für einen weiteren Takt des Folgezylinders (1) unter Druck stehendes Abgas des Arbeitszylinders (1) in den Folgezylinder (11) überführt, **dadurch gekennzeichnet, dass** dem Folgezylinder eine inverse Turbine nachgeschaltet ist, mit einer Eingangsstufe für eine Expansion unter Umgebungsdruck, einem der Eingangsstufe nachgeschalteten weiteren Zwischenkühler und einer Verdichtungsstufe für die abschließende Verdichtung auf Umgebungsdruck als Ausgangsstufe.

2. Motor nach Anspruch 1, **dadurch gekennzeichnet, dass** der Folgezylinder ein größeres Volumen aufweist als der Arbeitszylinder.

3. Motor nach Anspruch 2, **dadurch gekennzeichnet, dass** das Volumen des Folgezylinders das 1,2- bis 4-fache des Volumens des Arbeitszylinders beträgt.

4. Motor nach einem der Ansprüche 1 bis 3, **dadurch gekennzeichnet, dass** das Verdichtungsverhältnis (ε) des Folgezylinders zwischen 2 und 5 liegt.

5. Motor nach einem der vorstehenden Ansprüche, **dadurch gekennzeichnet, dass** als Kühleinrichtung (17) zwischen dem Ausgang des Folgezylinders und dem Eingang des Arbeitszylinders ein Zwischenkühler vorgesehen ist.

6. Motor nach einem der vorstehenden Ansprüche, **dadurch gekennzeichnet, dass** der Motor eine Abgasrückführung aufweist.

7. Motor nach einem der vorstehenden Ansprüche, **dadurch gekennzeichnet, dass** er als Vierzylindermotor ausgestaltet ist, mit je vier Arbeitszylindern und vier Folgezylindern und zwei Kurbelwellen (8, 22), von denen eine den Arbeitszylindern und die andere den Folgezylindern zugeordnet ist.

8. Motor nach einem der vorstehenden Ansprüche, **dadurch gekennzeichnet, dass** nach 7 dass die Kurbelwellen (8, 22) vorzugsweise einstellbar miteinander gekoppelt sind.

9. Motor nach einem der vorstehenden Ansprüche, **dadurch gekennzeichnet, dass** das Verdichtungsverhältnis des Arbeitszylinders zwischen 6 und 10 liegt.

10. Motor nach einem der vorstehenden Ansprüche, **dadurch gekennzeichnet, dass** die Zylinder in V-Form angeordnet sind, wobei ein Schenkel der V-Form durch die Arbeitszylinder und der andere Schenkel der V-Form durch die Folgezylinder gebildet wird.

11. Motor nach einem der vorstehenden Ansprüche, **dadurch gekennzeichnet, dass** der oder die Folgezylinder als 4-Taktzylinder ausgebildet sind.

12. Motor nach einem der Ansprüche 1-10, **dadurch gekennzeichnet, dass** der oder die Folgezylinder als 2-Taktzylinder ausgebildet sind, wobei die Zahl der Folgezylinder die Hälfte der Zahl der Arbeitszylinder beträgt und jeder Folgezylinder zwei verschiedenen Arbeitszylindern zugeordnet ist, deren Arbeitstakte im Wesentlichen um 180° zueinander versetzt sind.

13. Verfahren zum Betrieb eines Motors nach einem der Ansprüche 1 bis 12, bei welchem in einem ersten Takt eines Folgezylinders (11) Umgebungsluft ansaugt, diese in einem zweiten Takt verdichtet und nach Zwischenkühlung an einen Arbeitszylinder (1) überführt wird, wobei nach oder während eines entsprechenden Arbeitstaktes des Arbeitszylinders (1) das unter Restdruck stehende Abgas des Arbeitszylinders an den Folgezinder (11) überführt wird, der in einem dritten Takt das heiße Abgas aufnimmt, entspannt und in einem vierten Takt des Folgezylinders (11) mit einem reduzierten Restdruck ausstößt, **dadurch gekennzeichnet, dass** die Abwärme des aus dem Folgezylinder ausgestoßenen Abgases durch eine inverse Turbine in mechanische Arbeit umgewandelt wird.

14. Verfahren nach Anspruch 13, **dadurch gekennzeichnet, dass** der reduzierte Druck am Ausgang des Folgezylinders in etwa dem Umgebungsdruck entspricht.

15. Verfahren nach einem der 13 oder 14, **dadurch gekennzeichnet, dass** das Gas-Brennstoffgemisch im Arbeitszylinder später als 30° vorzugsweise später als 25° und bis zu 10°, besonders bevorzugt zwischen 20° und 10°vor dem oberen Totpunkt gezündet wird.

16. Verfahren nach einem der Ansprüche 13 - 15, **dadurch gekennzeichnet, dass** der Verbrennungsraum des Arbeitszylinders in einem Bereich zwischen 30 und 60° nach dem oberen Totpunkt mit dem Arbeitsvolumen des Folgezylinders verbunden wird.

## Claims

1. An engine comprising at least one working cylinder (1) which has valves (16) and/or nozzles for the feed or injection of fuel and air and for the outlet of exhaust gas, wherein each working cylinder (1) is coupled to a subsequent cylinder (11) which is driven by the pressure of hot exhaust gases from the working cylinder (1) and which is so designed and arranged that on the other hand it feeds pre-compressed combustion air to the working cylinder (1), a cooling device (17) which cools the pre-compressed gas, a device (9, 7) for transferring the cooled pre-compressed gas into the working cylinder (1) and a transfer valve (16) which for a further stroke of the subsequent cylinder (1) transfers exhaust gas under pressure from the working cylinder (1) into the subsequent cylinder (11), **characterised in that** disposed downstream of the subsequent cylinder is an inverse turbine having an inlet stage for expansion under ambient pressure, an intercooler connected downstream of the inlet stage and a compression stage for concluding compression to ambient pressure as the outlet stage.

2. An engine as set forth in claim 1 **characterised in that** the subsequent cylinder is of a larger volume than the working cylinder.

3. An engine as set forth in claim 2 **characterised in that** the volume of the subsequent cylinder is between 1.2 and 4 times the volume of the working cylinder.

4. An engine as set forth in one of claims 1 through 3 **characterised in that in that** the compression ratio (ε) of the subsequent cylinder is between 2 and 5.

5. An engine as set forth in one of the preceding claims **characterised in that** as a cooling device (17) an intercooler is provided between the outlet of the subsequent cylinder and the inlet of the working cylinder.

6. An engine as set forth in one of the preceding claims **characterised in that** the engine has an exhaust gas recirculation means.

7. An engine as set forth in one of the preceding claims **characterised in that** it is in the form of a four cylinder engine with respectively four working cylinders and four subsequent cylinders and two crankshafts (8, 22), of which one is associated with the working cylinders and the other with the subsequent cylinders.

8. A engine as set forth in one of the preceding claims **characterised in that** the crankshafts (8, 22) are preferably adjustably coupled together.

9. An engine as set forth in one of the preceding claims **characterised in that** the compression ratio of the working cylinder is between 6 and 10.

10. An engine as set forth in one of the preceding claims **characterised in that** the cylinders are arranged in a V-shape, wherein one bank of the V-shape is formed by the working cylinders and the other bank of the V-shape is formed by the subsequent cylinders.

11. An engine as set forth in one of the preceding claims **characterised in that** the subsequent cylinder or cylinders are in the form of a 4-stroke cylinder.

12. An engine as set forth in one of claims 1 through 10 **characterised in that** the subsequent cylinder or cylinders are in the form of 2-stroke cylinders, wherein the number of subsequent cylinders is half the number of working cylinders and each subsequent cylinder is associated with two different working cylinders, the working strokes of which are displaced relative to each other substantially through 180°.

13. A method of operating an engine as set forth in one of claims 1 through 12 in which in a first stroke of a subsequent cylinder (11) ambient air is drawn in, in a second stroke it is compressed and after intercooling it is transferred to a working cylinder (1), wherein after or during a corresponding working stroke of the working cylinder (1) the exhaust gas of the working cylinder, that is under residual pressure is transferred to the subsequent cylinder (11) which in a third stroke receives the hot exhaust gas, relieves its pressure and in a fourth stroke of the subsequent cylinder (11) ejects it with a reduced residual pressure, **characterised in that** the waste heat of the exhaust gas ejected from the subsequent cylinder is converted into mechanical work by an inverse turbine.

14. A method as set forth in claim 13 **characterised in that** the reduced pressure at the outlet of the subsequent cylinder approximately corresponds to the ambient pressure.

15. A method as set forth in one of claims 13 or 14 **characterised in that** the gas-fuel mixture in the working cylinder is fired later than 30°, preferably later than 25° and up to 10° particularly preferably between 20° and 10°, before the top dead center.

16. A method as set forth in one of claims 13 through 15 **characterised in that** the combustion chamber of the working cylinder is connected to the working volume of the subsequent cylinder in a range of between 30° and 60° after the top dead center.

## Revendications

1. Moteur comprenant au moins un cylindre de commande (1) présentant des clapets (16) et/ou des buses pour l'alimentation ou l'injection de carburant et d'air ainsi que pour la sortie des gaz d'échappement, dans lequel chaque cylindre de commande (1) est couplé à un cylindre récepteur (11) qui est entraîné par la pression des gaz d'échappement chauds du cylindre de commande (1) et qui est en outre conçu et agencé de manière à alimenter le cylindre de commande (1) en air de combustion précomprimé, comprenant un dispositif de refroidissement (17) qui refroidit le gaz précomprimé, un dispositif (9, 7) destiné à transférer le gaz précomprimé refroidi dans le cylindre de commande (1), et un clapet de transfert (16) qui transfère les gaz d'échappement sous pression du cylindre de commande (1) dans le cylindre récepteur (11) pour un autre cycle du cylindre récepteur (1), **caractérisé en ce qu'**est raccordée en aval du cylindre récepteur une turbine inverse ayant un étage d'entrée pour une détente sous pression ambiante, un refroidisseur intermédiaire supplémentaire raccordé en aval de l'étage d'entrée et un étage de compression, faisant office d'étage de sortie, pour la compression finale à la pression ambiante.

2. Moteur selon la revendication 1, **caractérisé en ce que** le cylindre récepteur présente un volume supérieur à celui du cylindre de commande.

3. Moteur selon la revendication 2, **caractérisé en ce que** le volume du cylindre récepteur représente entre 1,2 et 4 fois le volume du cylindre de commande.

4. Moteur selon l'une des revendications 1 à 3, **caractérisé en ce que** le degré de compression (ε) du cylindre récepteur est compris entre 2 et 5.

5. Moteur selon l'une des revendications précédentes, **caractérisé en ce qu'**un refroidisseur intermédiaire est prévu en tant que dispositif de refroidissement (17) entre la sortie du cylindre récepteur et l'entrée du cylindre de commande.

6. Moteur selon l'une des revendications précédentes, **caractérisé en ce que** le moteur présente un recyclage des gaz d'échappement.

7. Moteur selon l'une des revendications précédentes, **caractérisé en ce qu'**il est conçu en tant que moteur à quatre cylindres, comprenant respectivement quatre cylindres de commande et quatre cylindres récepteurs ainsi que deux vilebrequins (8, 22) dont l'un est associé aux cylindres de commande et l'autre aux cylindres récepteurs.

8. Moteur selon l'une des revendications précédentes, **caractérisé en ce que**, selon la revendication 7, les vilebrequins (8, 22) sont de manière préférée couplés les uns aux autres de manière réglable.

9. Moteur selon l'une des revendications précédentes, **caractérisé en ce que** le degré de compression du cylindre de commande est compris entre 6 et 10.

10. Moteur selon l'une des revendications précédentes, **caractérisé en ce que** les cylindres sont agencés en forme de V, une branche du V étant formée par les cylindres de commande et l'autre branche du V étant formée par les cylindres récepteurs.

11. Moteur selon l'une des revendications précédentes, **caractérisé en ce que** le ou les cylindres récepteurs est/sont réalisé(s) en tant que cylindre(s) à 4 temps.

12. Moteur selon l'une des revendications 1 à 10, **caractérisé en ce que** le ou les cylindres récepteurs est/sont réalisé(s) en tant que cylindre(s) à 2 temps, le nombre des cylindres récepteurs représentant la moitié du nombre de cylindres de commande et chaque cylindre récepteur étant associé à deux cylindres de commande différents dont les cycles de travail sont décalés les uns par rapport aux autres d'essentiellement 180°.

13. Procédé de fonctionnement d'un moteur selon l'une des revendications 1 à 12, dans lequel de l'air ambiant est aspiré lors d'un premier cycle d'un cylindre récepteur (11), ledit air ambiant est comprimé lors d'un deuxième cycle et est transféré vers un cylindre de commande (1) après refroidissement intermédiaire, où les gaz d'échappement sous pression résiduelle du cylindre de commande sont transférés, après ou pendant un cycle de travail correspondant du cylindre de commande (1), vers le cylindre récepteur (11) qui reçoit et détend les gaz d'échappement chauds lors d'un troisième cycle et les expulse avec une pression résiduelle réduite lors d'un quatrième cycle du cylindre récepteur (11), **caractérisé en ce que** la chaleur perdue des gaz d'échappement expulsés du cylindre récepteur est convertie en travail mécanique par une turbine inverse.

14. Procédé selon la revendication 13, **caractérisé en ce que** la pression réduite en sortie du cylindre récepteur correspond approximativement à la pression ambiante.

15. Procédé selon l'une des revendications 13 ou 14, **caractérisé en ce que** le mélange gaz-carburant est enflammé dans le cylindre de commande après 30°, de manière préférée après 25° et jusqu'à 10°, de manière particulièrement préférée entre 20° et 10° avant le point mort haut.

16. Procédé selon l'une des revendications 13 à 15, **caractérisé en ce que** la chambre de combustion du cylindre de commande est reliée au volume de travail du cylindre récepteur dans une plage comprise entre 30 et 60° après le point mort haut.
